# EUROPEAN PATENT APPLICATION

(11) **EP 4 697 117 A1**
(43) Date of publication of application: **18.02.2026**
(21) Application number: 23946152.8
(22) Date of filing: 24.07.2023
(51) Int. Cl.: G05D 1/43

(54) **MOVABLE PLATFORM CONTROL METHODS, APPARATUS, MOVABLE PLATFORM AND STORAGE MEDIUM**

(71) Applicant: SZ Zhuoyu Technology Co., Ltd., Shenzhen, Guangdong 518055 (CN)
(72) Inventor: YU, Haocen, Shenzhen, Guangdong 518055 (CN); ZHOU, Chenyang, Shenzhen, Guangdong 518055 (CN); QIU, Minjun, Shenzhen, Guangdong 518055 (CN); YU, Guoqing, Shenzhen, Guangdong 518055 (CN); WANG, Zhepei, Shenzhen, Guangdong 518055 (CN)
(74) Representative: Botti & Ferrari S.p.A.
(86) International application number: PCT/CN2023/108994
(87) International publication number: WO 2025/020058

(57) **Abstract**

The present application discloses a mobile platform control method, device, mobile platform, and storage medium. The method comprises: determining the number of available parking spaces around each passable passage based on environmental information acquired by sensors mounted on the mobile platform, in response to identifying that there are multiple passable passages within an area to be explored around the mobile platform; determining at least one target passable passage from the multiple passable passages based on the number of available parking spaces around each passable passage; and controlling the mobile platform to move along the at least one target passable passage within the area to be explored to search for an available parking space along the target passable passage. Accordingly, the exploration efficiency of the mobile platform moving within the area to be explored to search for an available parking space along the way is improved, so that the mobile platform can find a suitable available parking space more efficiently and quickly.

## Description

### TECHNICAL FIELD

Embodiments of the present application relate to the field of mobile platform control, and specifically, to a mobile platform control method, device, mobile platform, and storage medium.

### BACKGROUND

With the development of technology, various types of mobile platforms can achieve autonomous movement without manual operation by a user in order to complete certain specific tasks. For example, automatically driving vehicles, autonomously flying aircraft, and some autonomously navigating intelligent robots can all autonomously move, without user control, to certain environmental functional areas to complete specific tasks. For instance, they can automatically move to parking spaces, charging positions, and other environmental functional areas to complete parking or charging tasks. However, in existing solutions, the effect of mobile platforms autonomously moving to complete specific tasks is not good. Therefore, there is a need to provide a more effective solution to better realize autonomous movement of mobile platforms within an environmental area so as to complete specific tasks in that area more efficiently.

### SUMMARY

In view of the above, the present application provides a mobile platform control method, device, mobile platform, and storage medium.

According to a first aspect of the present application, there is provided a control method for a mobile platform, the method comprising:
determining the number of available parking spaces around each passable passage based on environmental information acquired by sensors mounted on the mobile platform, in response to identifying that there are multiple passable passages within an area to be explored around the mobile platform;
determining at least one target passable passage from the multiple passable passages based on the number of available parking spaces around each passable passage; and
controlling the mobile platform to move along the target passable passage within the area to be explored to search for an available parking space along the target passable passage.

According to a second aspect of the present application, there is provided a control method for a mobile platform, the method comprising:
determining description information of a surrounding environment of each passable passage based on environmental information acquired by sensors mounted on the mobile platform, in response to identifying that there are multiple passable passages within an area to be explored around the mobile platform;
wherein the description information includes at least one of the following information: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

According to a third aspect of the present application, there is provided a control device for a mobile platform, the device comprising a processor, a memory, and a computer program stored in the memory and executable by the processor, wherein when executing the computer program, the processor is configured to perform the following steps:
determining the number of available parking spaces around each passable passage based on environmental information acquired by sensors mounted on the mobile platform, in response to identifying that there are multiple passable passages within an area to be explored around the mobile platform;
determining at least one target passable passage from the multiple passable passages based on the number of available parking spaces around each passable passages; and
controlling the mobile platform to move along the target passable passage within the area to be explored to search for an available parking space along the target passable passage.

According to a fourth aspect of the present application, there is provided a control device for a mobile platform, the device comprising a processor, a memory, and a computer program stored in the memory and executable by the processor, wherein when executing the computer program, the processor is configured to perform the following steps:
determining description information of a surrounding environment of each passable passage based on environmental information acquired by sensors mounted on the mobile platform, in response to identifying that there are multiple passable passages within an area to be explored around the mobile platform;
wherein the description information includes at least one of the following information: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

According to a fifth aspect of the present application, there is provided a mobile platform, wherein the mobile platform comprises the control device for the mobile platform mentioned in the third aspect and/or the fourth aspect above.

According to a sixth aspect of the present application, there is provided a computer-readable storage medium, wherein a computer program is stored on the computer-readable storage medium, and when the computer program is executed, the method mentioned in the first aspect and/or the second aspect above is implemented.

By applying the solution provided by the present application, when it is identified that there are multiple passable passages within an area to be explored around the mobile platform, the environmental information around the mobile platform can be acquired by sensors mounted on the mobile platform, and at least one target passable passage can be automatically determined from the multiple passable passages without user operation. This improves the exploration efficiency of the mobile platform when moving within the area to be explored to search for available parking spaces along the way, thereby enabling the mobile platform to explore a suitable available parking space more efficiently and quickly.

It should be understood that the foregoing general description and the following detailed description are merely exemplary and illustrative, and are not intended to limit the present application.

### BRIEF DESCRIPTION OF THE DRAWINGS

In order to more clearly illustrate the technical solutions in the embodiments of the present application, a brief introduction will be made below to the accompanying drawings that are required for describing the embodiments. It is apparent that the accompanying drawings described below are merely some embodiments of the present application. For those of ordinary skill in the art, other drawings can also be obtained based on these drawings without creative work.
FIG. 1 is a schematic diagram of an application scenario according to one embodiment of the present application.
FIG. 2 is a flowchart of a mobile platform control method according to one embodiment of the present application.
FIG. 3 is a schematic diagram of determining multiple passable passages in a velocity direction according to one embodiment of the present application.
FIG. 4 is a schematic diagram of identifying the number of available parking spaces from description information of a signboard according to one embodiment of the present application.
FIG. 5 is a schematic diagram illustrating the accumulation of experiential data during the exploration process of a mobile platform according to one embodiment of the present application.
FIG. 6 is a schematic diagram of determining an area to be explored based on a target position according to one embodiment of the present application.
FIG. 7 is a schematic diagram of controlling a mobile platform returning to a target marked position according to one embodiment of the present application.
FIG. 8 is a schematic diagram illustrating a mobile platform escaping from a dead end according to one embodiment of the present application.
FIG. 9 is a schematic diagram of the logical structure of a mobile platform control device according to one embodiment of the present application.

### DETAILED DESCRIPTION

The technical solutions in the embodiments of the present application will be clearly and completely described below in conjunction with the accompanying drawings of the embodiments of the present application. It is obvious that the described embodiments are merely part of the embodiments of the present application, rather than all of the embodiments. Based on the embodiments in the present application, all other embodiments obtained by those of ordinary skill in the art without creative work shall fall within the scope of protection of the present application.

With the development of technology, various types of mobile platforms can realize autonomous movement without manual control by a user, so as to complete certain specific tasks. For example, automatically driving vehicles, autonomously flying aircraft, and some autonomously navigating intelligent robots can all autonomously move, without user control, to certain environmental functional areas to complete specific tasks. For instance, they can automatically move to parking spaces, charging positions, and other environmental functional areas to complete parking or charging tasks. However, in existing solutions, the effect of a mobile platform autonomously moving to complete specific tasks is not satisfactory.

In scenarios without user control, in order to improve the effect of the autonomous movement of the mobile platform in completing specific tasks, one way is that the mobile platform realizes autonomous movement with the assistance of a pre-constructed map so as to complete specific tasks.

Taking a mobile platform as a vehicle for example, in the case of automatic parking in a parking lot scenario, one existing parking solution is "memory parking". This method requires a user to first drive once within the parking lot, pre-construct a map of the driven area, and establish a memory route. When the vehicle later enters the vicinity of the memory route and is successfully localized, the vehicle can cruise along the memory route to search for a parking space and park. This method requires the vehicle to have driven in the parking lot and to have established a memory route in advance. In terms of application scenarios, it is suitable for parking lots where the user commutes frequently or has a fixed parking space. However, for vehicles entering an unfamiliar parking lot for the first time, or for parking lots that are infrequently visited, this solution has certain limitations. Another method is to integrate the maps built by users of vehicle manufacturers in the parking lot on the basis of memory parking to form a crowdsourced map. In this way, vehicles can cruise, search for parking spaces, and park within the parking lot according to the crowdsourced map. However, at the present stage, crowdsourced maps depend on vehicle manufacturers and the activity range of their users. A further method is to cruise, search for parking spaces, and automatically park in parking lots equipped with complete maps or with modified facilities. However, this method also relies on parking lot maps. The drawing and updating of parking lot maps, or modification of parking lots, involve relatively high construction and maintenance costs and limited coverage, and currently, only a few parking lots in first-tier cities support such systems.

However, in some scenarios, a mobile platform may not be able to obtain valid map information for the current movement area. For example, when a mobile platform comes to an area for the first time, it cannot obtain the map of that area; or the mobile platform can obtain the map, but the map is incomplete; or after moving with the help of a map to a certain position, the mobile platform finds that there is no map available for the area ahead. At present, for such areas without maps, a mobile platform generally cannot achieve long-distance autonomous movement and usually requires manual control by the user, which is not intelligent or convenient enough. For example, in the case of vehicle parking, currently, the user usually has to manually drive the vehicle to a position near an available parking space within the parking lot before automatic parking can be realized. It is not possible for the vehicle to autonomously move within the parking lot from the entrance to automatically search for available parking spaces and park.

In order to enable a mobile platform to autonomously move within an area to search for available parking spaces or other specific environmental functional areas, one method is to utilize sensors mounted on the mobile platform to acquire environmental information, and based on this environmental information, control the mobile platform to perform exploratory movement within the area without distinction in order to find available parking spaces. For such exploratory movement scenarios, since the mobile platform needs to continually explore based on environmental information and repeatedly adjust its movement path, the efficiency is often low, and it takes a long time to find an available parking space. Therefore, it is necessary to provide an effective solution to enable the mobile platform to autonomously move within an area to be explored to search for available parking spaces along the way, thereby achieving specific tasks more efficiently.

Unlike solutions that control a mobile platform to automatically park after a target available parking space has already been determined from multiple identified available parking spaces, the present application takes into consideration that during the exploratory movement process of the mobile platform within an area, when the mobile platform reaches an intersection where multiple passable passages converge, such as a crossroads, the choice of passage is particularly critical, as it is closely related to the exploration efficiency of searching for available parking spaces. If a reasonable passable passage, such as one with a higher likelihood of finding a target parking space nearby, can be selected, the efficiency of the mobile platform in exploring available parking spaces within the area to be explored can be greatly improved, enabling efficient and rapid searching for a target available parking space in the area to be explored.

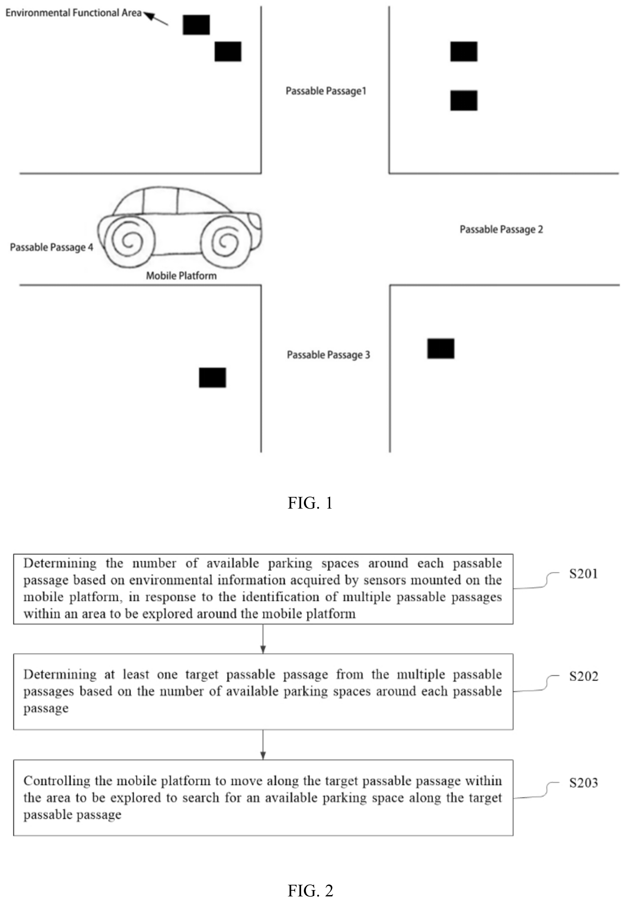

Based on this, the embodiment of the present application provides a control method for a mobile platform. As shown in FIG. 1, when a scenario is detected in which there are multiple passable passages (such as passable passages 1 to 4 in the figure) in an area to be explored around the mobile platform, environmental information around the mobile platform can be acquired by sensors mounted on the mobile platform. Then, based on the environmental information, description information of each passable passage can be determined, wherein the description information can be various kinds of information describing the characteristics of each passable passage. For example, it may describe whether the passage has been traveled before, the number of environmental functional areas along the passage, whether the passage is a dead end, or the passable distance of the passage, among other types of information. This description information can assist the mobile platform in efficiently and rapidly finding suitable environmental functional areas while moving along the target passable passage, thereby improving the exploration efficiency of environmental functional areas within the area to be explored. When the mobile platform moves to an intersection, it can determine the description information of each passable passage at the intersection based on the environmental information acquired by the sensors, and select an optimal target passable passage (one that can quickly lead to suitable environmental functional areas) based on the description information, thereby greatly improving the exploration efficiency of the mobile platform within the area to be explored.

In some scenarios, the mobile platform control method in the embodiment of the present application can be executed by the mobile platform itself, for example, by a control device provided within the mobile platform, which may be a processor or a chip. In some scenarios, the mobile platform control method in the embodiment of the present application can also be executed by a control device connected to the mobile platform, which can be a cloud server or various mobile terminals (for example, a mobile phone). The mobile platform can send the acquired environmental information to the control device. The control device determines the target passable passage and generates a control instruction for controlling the movement of the mobile platform, and then returns the control instruction to the mobile platform. In some scenarios, the mobile platform control method in the embodiment of the present application can also be executed such that part of the steps are performed by the mobile platform and part by the control device connected to the mobile platform. The specific configuration can be flexibly set based on actual needs, and the embodiment of the present application does not impose any limitation.

The mobile platform in the embodiment of the present application may be a vehicle, aircraft, ship, intelligent robot, or other movable device. The mobile platform may be a manned mobile platform or an unmanned mobile platform. Optionally, the mobile platform includes a payload for performing operations, which may be another mobile platform, an imaging device, a mechanical arm, a hoisting system, a spraying system, etc. The embodiment of the present application does not specifically limit the type of payload. Optionally, the mobile platform is equipped with sensors for acquiring environmental information, wherein the sensors may be monocular/binocular cameras, LiDAR, millimeter-wave radar, and so on. The embodiment of the present application does not impose limitations.

In some embodiments, the vehicle may include an automatic driving vehicle, a manually driven vehicle, or a human-machine shared driving vehicle. Optionally, the vehicle can be applied to one or more scenarios such as passenger cars, logistics vehicles, and sanitation vehicles. The above are merely illustrative examples and should not be construed as limiting the embodiments of the present application.

In some embodiments, the aircraft may include rotorcraft, such as quadrotor, hexarotor, or octorotor aircraft, or may be a fixed-wing aircraft, or a combination of rotorcraft and fixed-wing aircraft. Optionally, the aircraft includes an unmanned aerial vehicle. The above are merely illustrative examples, and the embodiment of the present application does not specifically limit the type of aircraft.

Any description in the present application referring to a vehicle may apply to any movable object, such as any carrier. In addition, the methods and devices disclosed in the present application for ground movement scenarios can also be applied to other types of movement scenarios, such as movement in the air, on or under water, or in space.

In some scenarios, the area to be explored in the embodiment of the present application may be an area in which the mobile platform can autonomously move. The area to be explored may be an area that the mobile platform has traveled or not traveled through. For example, when the mobile platform moves to a crossroads, each passable passage at the crossroads may be an area to be explored. In some scenarios, the area to be explored in the embodiment of the present application may also refer to an area that the mobile platform has not traveled through. For example, when the mobile platform moves to a crossroads, the left-turn passage is a passage that the mobile platform has traveled through; therefore, the area to be explored may be the other passable passages except the left-turn passage.

In the embodiment of the present application, a passable passage refers to a passage through which the mobile platform can travel, and an environmental functional area may include various areas such as a parking space, charging position, passenger drop-off position, exit, entrance, elevator entrance, or car wash area.

In some embodiments, the description information may include at least one of the following information: a distribution of available parking spaces around the passable passage, a coincidence rate between the passable passage and a historical movement trajectory of the mobile platform, and a passable length of the passable passage. For example, the target passable passage can be determined based on any one of the above types of description information, or by combining multiple types of the above information. For example, in some scenarios, scoring criteria can be set for each type of description information. For instance, the number of available parking spaces within different numerical ranges may correspond to different scores; the coincidence rate between the passable passage and the historical movement trajectory of the mobile platform within different ranges may correspond to different scores; and the length of the passable passage within different ranges may also correspond to different scores. Then, a weight can be assigned to each description information score based on the importance of each type of description information. For each passable passage, the corresponding score can be determined based on the three types of description information for that passable passage, and the final score for each passable passage can be obtained based on the weights and scores of each description information. The target passable passage can then be selected based on the scores. For example, a passable passage with the highest score is selected as the target passable passage.

In some embodiments, the description information may be the distribution of available parking spaces, and the control method of the mobile platform can be used to control the mobile platform to autonomously move within an area so as to automatically and efficiently search for available parking spaces along the way. In such a scenario, as shown in FIG. 2, the method may include the following steps:

S202: determining the number of available parking spaces around each passable passage based on environmental information acquired by sensors mounted on the mobile platform, in response to identifying that there are multiple passable passages within an area to be explored around the mobile platform.

In step S202, the mobile platform may acquire surrounding environmental information through sensors mounted thereon and, based on the environmental information, identify whether there are multiple passable passages in the area to be explored of the mobile platform. If so, the number of available parking spaces around each passable passage may be determined based on the environmental information acquired by the sensors mounted on the mobile platform. The environmental information may include various kinds of information such as road markings, road facilities, traffic signs, landmark buildings, and static/dynamic obstacles. Optionally, identifying that there are multiple passable passages within an area to be explored around the mobile platform may be achieved through online perception recognition by the mobile platform. Optionally, the mobile platform may acquire map information related to the passable passages, and then, based on the positioning information of the mobile platform, determine that there are multiple passable passages around the mobile platform.

S204: determining at least one target passable passage from the multiple passable passages based on the number of available parking spaces around each passable passage.

In step S204, after determining the number of available parking spaces around each passable passage, at least one target passable passage can be determined from the multiple passable passages based on the number of available parking spaces. In some embodiments, there may be multiple target passable passages, and the number of available parking spaces around these multiple target passable passages is greater than that around other passable passages. That is, the mobile platform may select multiple passable passages as target passable passages. For example, passable passage 1 and passable passage 2, which have more available parking spaces around them, may be selected as target passable passages. Optionally, the above two target passable passages may be ranked by priority, and the mobile platform may be controlled to move sequentially along these multiple target passable passages in an order of priority. In some embodiments, the number of available parking spaces around the target passable passage is greater than the number of available parking spaces around other passable passages among the multiple passable passages.

By selecting the passage with more available parking spaces around it as the target passable passage, during movement along the target passable passage, the mobile platform will have access to more available parking spaces to make selection therefrom, thereby increasing the probability of finding an available parking space suitable for or meeting actual needs. Furthermore, it should be noted that, in some practical scenarios, the number of available parking spaces around each passable passage may change in real time due to environmental factors. For example, at the current moment, eight available parking spaces may be detected around passable passage A and three around passable passage B. During movement of the mobile platform along passable passage A, after a period of time, the number of available parking spaces may change because other mobile platforms leave or occupy parking spaces. For instance, there may still be nine available parking spaces around passable passage A and only one around passable passage B. Therefore, selecting the passable passage with more available parking spaces as the target passable passage can also, to some extent, reduce the likelihood that suitable available parking spaces cannot be found near the selected passable passage due to real-time environmental changes.

S206: controlling the mobile platform to move along at least one target passable passage within the area to be explored to search for an available parking space along the way.

In step S206, after determining the target passable passage, the mobile platform may be controlled to move within the area to be explored along at least one target passable passage to search for an available parking space. That is, the mobile platform can perform exploratory movement within the target passable passage based on the acquired environmental information and search for available parking spaces around the target passable passage.

In this embodiment, when multiple passable passages are identified in the area to be explored around the mobile platform, the environmental information around the mobile platform can be acquired using the sensors mounted on the mobile platform. Without user operation, at least one target passable passage can be automatically determined from multiple passable passages based on the number of available parking spaces around the passable passages, thereby improving the exploration efficiency of the mobile platform in searching for available parking spaces along the way in the area to be explored, and enabling the mobile platform to more efficiently and rapidly find suitable available parking spaces.

Furthermore, it should be noted that the more available parking spaces there are around the target passable passage, the more available parking spaces the mobile platform can search for and choose during movement along the target passable passage. This means that the likelihood of finding an available parking space that is more suitable or meets actual needs around the target passable passage is higher, allowing the mobile platform to quickly find an available parking space and control parking during movement along the target passage. This improves the exploration efficiency of the mobile platform in searching for available parking spaces along the way in the area to be explored, enabling it to more efficiently and rapidly find suitable available parking spaces. Conversely, if another passable passage is selected instead of the target passable passage, the probability of finding suitable available parking spaces during movement along that passage is lower, resulting in the mobile platform possibly traversing the entire passage without finding an available parking space, and thus needing to continue moving within the area to be explored to search for available parking spaces. This would take more time and could lead to missing target available parking spaces, thereby reducing the exploration efficiency of the mobile platform in searching for available parking spaces along the way.

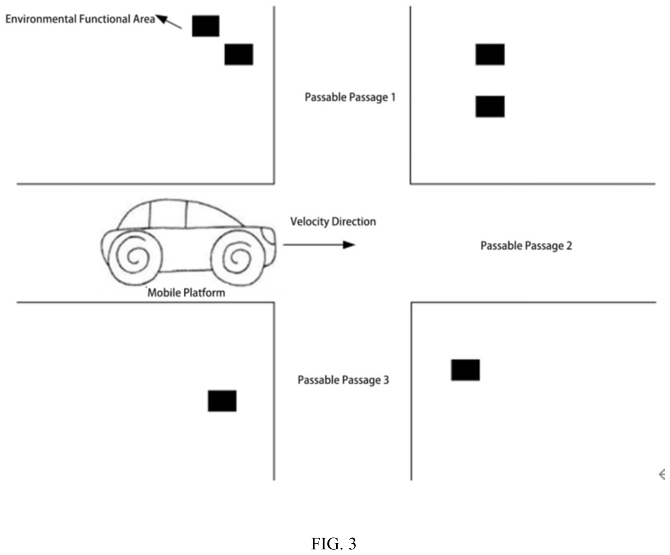

In some embodiments, when detecting whether there are multiple passable passages within the area to be explored around the mobile platform, detection may be based on whether there are multiple passable passages within the surrounding area to be explored in a velocity direction of the mobile platform. For example, as shown in FIG. 3, passable passages 1 to 3 are in the velocity direction of the mobile platform, while passable passage 4 has already been traveled by the mobile platform, representing an area that has already been explored but where no available parking spaces were found, and thus can be excluded from consideration. During the autonomous movement process of the mobile platform, on one hand, the movement path can be planned based on environmental information acquired by the sensors to move within the area to be explored, and on the other hand, the user may also control the movement path of the mobile platform based on personal judgment, such as operation requirements, safety, or effectiveness. That is, the mobile platform may also receive operation instructions from the user. For example, in an automatic driving scenario where the user is also in the vehicle, when the vehicle arrives at an intersection, the vehicle may determine a target passable passage based on the description information of each identified passable passage, while the user may also, based on personal judgment, operate and control the vehicle, through the operation components provided in the vehicle, such as at least one of the driving mode switch button, turn signal lever, brake pedal, accelerator, and steering wheel, to move in a certain passable passage direction, that is, to manually select the passable passage for the vehicle.

In some embodiments, to avoid conflicts between the two types of instructions in the above scenario and improve user experience, the priority of user instructions may optionally be set higher. When a user operation instruction is received, the user operation instruction is given priority. Therefore, if multiple passable passages are detected in the movement direction of the mobile platform, it can first be determined whether a user operation instruction is received. If a user operation instruction is received, the mobile platform is directly controlled to move along the passable passage indicated by the user operation instruction.

In some embodiments, if the user operation instruction is not received, the description information of the surrounding environment of each passable passage may be determined based on environmental information acquired by the sensors, and at least one target passable passage may be determined from multiple passable passages according to the description information. A movement control instruction may then be generated, which is used to control the mobile platform to move within the area to be explored along the target passable passage.

Of course, in some scenarios, in order to filter out a target passable passage that better meets requirements, even if a user operation instruction is received, the determination of at least one target passable passage from multiple passable passages may also be made by combining the user operation instruction with the description information of each passable passage determined by the mobile platform. For example, if the passable passage indicated by the user operation instruction is the same as the passable passage selected based on the description information, that selected passable passage may be directly set as the target passable passage. If the two are inconsistent, a prompt may be issued to the user, allowing the user to choose whether to move along the passable passage indicated by the user operation instruction or along the passable passage selected based on the description information.

In some embodiments, when determining at least one target passable passage from multiple passable passages, in addition to the number of available parking spaces on each passable passage, one or more of the following information may also be used: a distribution of environmental functional areas around each passable passage, a coincidence rate between each passable passage and a historical movement trajectory of the mobile platform, and a passable length of each passable passage.

In some embodiments, the environmental functional areas may include one or more of the following: charging positions, passenger drop-off positions, exits, and entrances. When determining the target passable passage from multiple passable passages, in addition to considering the distribution of available parking spaces around the passable passage, the distribution of other types of environmental functional areas can also be considered for a more intelligent selection of the target passable passage, ensuring that the parking spaces found along the way are more reasonable and further improving the user experience. For instance, taking the mobile platform as a vehicle, during the process of searching for available parking spaces, the vehicle can automatically find a charging position to meet its charging needs, or automatically park near specific positions such as elevator entrances, pedestrian exits, or environmental entrances/exits, allowing the user to reach the destination or return to the vehicle more quickly and conveniently. Therefore, it is also possible to further select the target passable passage based on whether there are charging positions, passenger drop-off positions, nearby elevator entrances, or other entrances/exits facilitating user access to the parking lot around each passable passage.

In some embodiments, when environmental functional areas are detected around multiple passable passages, the number of environmental functional areas around the determined target passable passage is greater than that around other passable passages among the multiple passable passages. Thus, during movement along the target passable passage, the probability of efficiently and rapidly finding more suitable or more practically needed environmental functional areas is higher. For example, if more charging positions are distributed around the target passable passage than around other passable passages, the mobile platform can quickly search for suitable charging positions during movement along the passable passage. Similarly, if more elevator entrances are distributed around the target passable passage than around other passable passages, the mobile platform can park in an available parking space near the passable passage, enabling the user to have more elevator entrance options nearby, thereby facilitating easier and faster access to the destination or back to the parking space from suitable elevator entrance.

In some embodiments, environmental functional areas exist around the determined target passable passage, while no environmental functional areas exist around other passable passages. For example, if a passenger drop-off position exists around the target passable passage, the mobile platform can park in an available parking space near the passenger drop-off position, making it easier for the user to quickly find the mobile platform again near the passenger drop-off position.

Furthermore, considering that passable passages already traversed by the mobile platform are often those where no available parking spaces or no suitable available parking spaces meeting user's requirements were found by the mobile platform, in order to avoid the mobile platform repeatedly moving in passable passages without available parking spaces, thereby reducing exploration efficiency, the determination of at least one target passable passage from multiple passable passages can also take into account the coincidence rate between each passable passage and the historical movement trajectory of the mobile platform. If it is detected that a certain passable passage has a high coincidence rate with the historical movement trajectory of the mobile platform, it indicates that the passable passage has most likely already been traveled by the mobile platform, and thus other passable passages can be preferentially selected instead of this one.

In some embodiments, the target passable passage does not coincidence with the historical movement trajectory of the mobile platform, i.e., the target passable passage is one that the mobile platform has not traveled.

Alternatively, in some embodiments, in order to avoid the mobile platform's moving along a target passable passage that would lead it back to previously explored areas, the target passable passage can also be one that does not point toward areas already explored by the mobile platform. That is, when moving along the target passable passage, the mobile platform will not move into areas it has already explored, thereby avoiding redundant exploration and improving exploration efficiency.

In addition, during movement of the mobile platform within the area to be explored, it is generally desirable for the mobile platform not to move into dead ends, passages blocked by large obstacles, or narrow passages impassable for the mobile platform, as such scenarios may cause the mobile platform to become trapped within a passage, requiring a long time to escape and significantly reducing exploration efficiency. Therefore, in some embodiments, when determining at least one target passable passage from multiple passable passages, the passability of each passable passage may be considered in selecting the target passable passage. For example, the finally selected target passage may satisfy preset conditions for passability.

In some embodiments, to more intuitively determine the passability of the target passable passage, the passable length of the target passable passage can be directly used as a measure of passability. The longer the passable passage, the better its passability. That is, the passable length of the finally selected target passable passage is greater than that of other passable passages among the multiple passable passages.

Of course, in actual selection of the target passable passage, the target passable passage may satisfy only one of the above conditions, or may simultaneously satisfy multiple or all of the above conditions, and the specific configuration can be flexibly set based on actual needs. For example, for a scenario in which the area to be explored is an area in which the mobile platform has moved autonomously and has not moved in a map-free scenario, the target passable passage can be determined by combining the distribution of environmental functional areas around each passable passage, the coincidence rate between each passable passage and the historical movement trajectory of the mobile platform, and the passable length of each passable passage. For a scenario in which the area to be explored is an area that the mobile platform has not moved through, the target passable passage can be determined by combining the distribution of environmental functional areas around each passable passage and the passable length of each passable passage.

When the mobile platform finds an available parking space in the area to be explored, in some scenarios, the user may wish the mobile platform to directly park in the available parking space. Of course, there are also some scenarios where the user may temporarily change the intention to park the mobile platform in the available parking space and issue a new operation task for the mobile platform. For example, in an automatic parking scenario, when the user drives the vehicle to the entrance of the parking lot, and triggers the automatic parking exploration function of the vehicle, the vehicle can autonomously move in the area to be explored in the above manner to search for available parking spaces. Then the user can leave the vehicle to handle matters. When the vehicle finds an available parking space, the user may have already finished handling the matters and needs to drive home directly at this time. If the vehicle directly parks in the available parking space, it may take time to drive out of the available parking space again, wasting the energy consumption of the vehicle. In addition, in some scenarios, the available parking space found by the mobile platform may not meet the user's expectations. For example, the currently found available parking space may be far from the elevator entrance, requiring the user to walk a long distance from the elevator entrance to the parking space. In this case, if the mobile platform directly parks in the space, the user's parking experience will be degraded.

To avoid the above problems, in some embodiments, when it is detected that the mobile platform moves near the available parking space, prompt information can first be sent to the user informing that the mobile platform has found an available parking space, allowing the user to confirm whether to park in the available parking space. If the user confirms to park in the available parking space, then directly parking can be done. If a cancel operation is received from the user, the mobile platform can be controlled to leave the vicinity of the available parking space and execute the new task issued by the user. For example, in the parking scenario mentioned above, the vehicle can directly drive to the exit of the parking lot so that the user can ride home. Alternatively, the mobile platform can be controlled to leave the vicinity of the available parking space and look for a new available parking space that better meets the user's expectations or is more reasonable.

For other types of functional service areas such as charging positions, entrances and exits, and passenger drop-off positions, operation can be conducted similarly to the above. For example, after the mobile platform finds a functional service area in the area to be explored, it can send prompt information to the user. If a confirmation operation is received from the user, a control instruction can be generated, which is used to instruct the mobile platform to travel to the environmental functional area to complete a preset service, such as traveling to a charging position to charge the mobile platform. If a cancel operation is received from the user, the mobile platform can be controlled to leave the vicinity of the functional service area.

Of course, when the mobile platform moves within the area to be explored to search for available parking spaces, there may also be scenarios where no available parking spaces exist in the area to be explored. Therefore, in some embodiments, if the mobile platform does not find an available parking space in the area to be explored, it can identify a specific area within the area to be explored based on environmental information acquired by the sensors, and control the mobile platform to move to and stay in that specific area. The specific area can be an area where movable objects appear less frequently, so that the mobile platform can temporarily park there to avoid affecting the movement of other movable objects.

In some embodiments, the number of movable objects around the specific area is less than a preset number, or the number of movable objects passing through the specific area per unit time is less than a preset number. The movable objects may be pedestrians and/or other mobile platforms.

For example, in an automatic parking scenario, the user only needs to park for a short time in some situations. Therefore, if the vehicle cannot find an available parking space in the parking lot, the vehicle can be controlled to look for an area in the parking lot with fewer vehicles and/or pedestrians (movable objects), or an area with lower traffic and/or pedestrian flow, to allow the vehicle to temporarily park.

In some embodiments, if the mobile platform does not find an available parking space in the area to be explored, the information about the environmental functional areas outside the area to be explored can also be determined, and the mobile platform is controlled to move to such environmental functional areas. For example, in an automatic parking scenario, if no available parking space is found in the parking lot, the vehicle can be controlled to drive to nearby areas that can provide car washing or charging services, so that the vehicle automatically drives to these areas to complete washing or charging services.

In some scenarios, considering that the user is not on the mobile platform during the autonomous movement of the mobile platform within the area to be explored to search for available parking spaces (that is, the distance between the user and the mobile platform is relatively far), in order to allow the user to remotely control the mobile platform, the mobile platform can be connected in communication with the user's mobile terminal (for example, a mobile phone). The user can remotely send information about an environmental functional area outside the area to be explored to the mobile platform through the mobile terminal and remotely control the mobile platform to move to the environmental functional area.

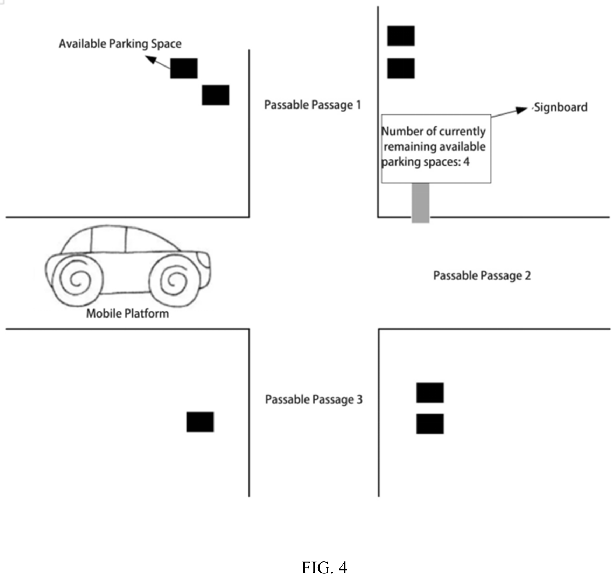

In some embodiments, the number of available parking spaces around each passable passage can be determined based on the description of identifiers identified from environmental information. For example, as shown in FIG. 4, taking a parking lot as an example, there are usually signboards in parking lots displaying the number of remaining available parking spaces in each area. Therefore, the vehicle can identify the number of available parking spaces from the images of signboards acquired by the sensor and determine the number of available parking spaces around each passable passage based on this number.

In some embodiments, when determining the number of available parking spaces around each passable passage, the identifiers can also be recognized based on environmental information, where the identifiers include marking lines and/or marking devices that can be used to indicate parking spaces. Then, based on the identified identifiers, the positions and number of environmental functional areas around each passable passage can be determined. For example, in a parking lot, parking spaces are usually indicated by parking space lines. Therefore, the vehicle can identify these parking space lines from environmental information acquired by the sensors, determine the parking spaces based on the parking space lines, and count the number of parking spaces around each passable passage.

In some embodiments, based on environmental information acquired by the sensors, the environmental functional areas around each passable passage can be identified, and the distribution information of the environmental functional areas around each passable passage can be determined according to the identified environmental functional areas. In some embodiments, the mobile platform can identify identifiers based on environmental information acquired by the sensors, and determine the distribution information of environmental functional areas around each passable passage based on the distribution information of environmental functional areas represented by the identified identifiers. In some embodiments, during the movement of the mobile platform within the area to be explored, the map of the explored area can be constructed using environmental information acquired by the sensors. The mobile platform can determine the distribution information of environmental functional areas around each passable passage based on the environmental information acquired by the sensors and the constructed map.

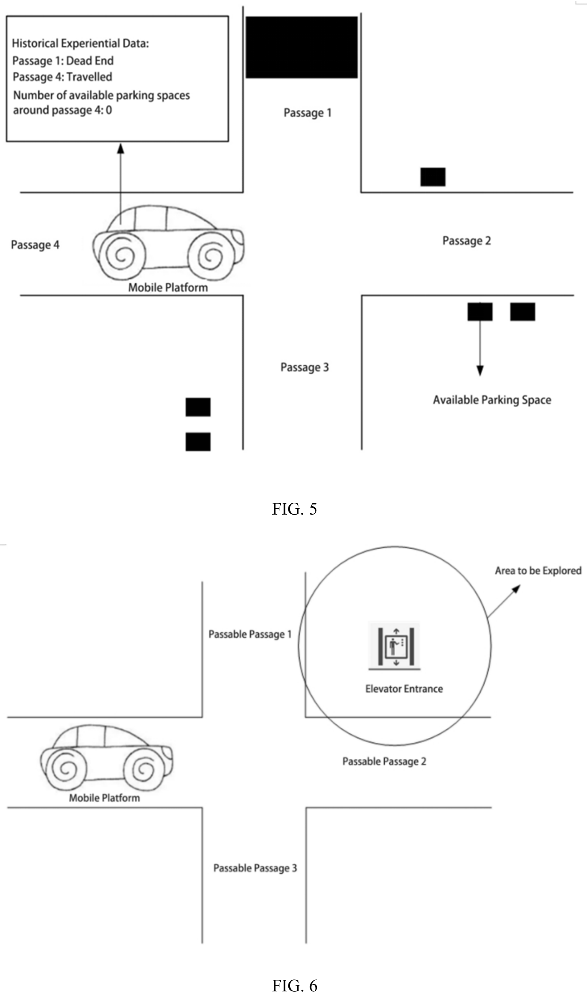

In some embodiments, the environmental information may be historical and/or current environmental information acquired during the movement of the mobile platform in the area to be explored. For example, as shown in FIG. 5, during the movement of the mobile platform in the area to be explored, the surrounding environmental information can be acquired by the sensors, and then the surrounding environment can be analyzed based on the environmental information, marking the passages that have been traversed, marking dead ends, and counting the available parking spaces, charging positions, passenger drop-off positions, entrances, exits, and other environmental functional areas around the currently traversed passable passages, and recording this experiential data that can be used to assist the mobile platform in efficiently searching for available parking spaces. For example, as shown in FIG. 5, during movement, environmental information can be continuously acquired, and the experiential data can be continuously updated based on the environmental information. When the mobile platform moves to an intersection, the number of available parking spaces and other environmental functional areas around each passable passage can be determined based on the environmental information acquired at the current moment, or whether each passable passage leads to unexplored areas can be determined based on the environmental information acquired at the current moment, or the passability of each passable passage can be determined based on the environmental information acquired at the current moment to complete the screening of the target passable passage. At the same time, the historical accumulated experiential data can also be combined to complete the screening of the target passable passage to obtain more accurate screening results.

By continuously extracting experiential information from acquired environmental information during the movement of the mobile platform, which can assist the mobile platform in efficiently searching for environmental functional areas, and storing it for use in guiding the selection and planning of the movement path of the mobile platform, the exploration efficiency of the mobile platform can be further improved.

In some embodiments, an area to be explored can be within a preset distance range from a target position, where the target position can be determined based on position information obtained from a user operation instruction, or the target position can be determined based on preset position information detected from environmental information, or the target position can be determined by combining both types of information. For example, in an automatic parking scenario, as shown in FIG. 6, if a user wants to find an available parking space near an elevator entrance, the user can input "elevator entrance" in an interaction interface of the mobile platform, or input "elevator entrance" through the control device of the mobile platform, or input "elevator entrance" through a voice command. After the mobile platform obtains the target position (e.g., "elevator entrance") indicated by the user's instruction, it can automatically explore within the parking lot area to find the elevator entrance, and after finding the elevator entrance, take the area within a preset distance range from the elevator entrance as the area to be explored, for example, an area within 300 meters from the elevator entrance as the area to be explored, to search for available parking spaces within the area to be explored. The preset distance can be pre-set based on actual needs. Alternatively, if the user wants to find an available parking space on the basement level one of the parking lot, the user can input "basement level one", so that the vehicle takes basement level one as the area to be explored and searches for available parking spaces in that area.

In some embodiments, some specific types of positions, such as elevator entrances or parking lot entrances, can be pre-set as target positions. When the mobile platform in movement identifies these preset positions through the acquired environmental information, it can automatically take the area within a certain distance from the preset position as the area to be explored. For example, in an automatic parking scenario, when the vehicle identifies through the acquired environmental information that the current vehicle has be driven to the parking lot entrance, it can automatically activate the parking exploration mode and take the area within a certain distance from the parking lot entrance as the area to be explored, and autonomously move in that area to search for available parking spaces.

In some embodiments, the mobile platform can also generate area restriction information, which is used to restrict the area to be explored by the mobile platform.

In some embodiments, after determining the area to be explored for the mobile platform, it can be detected whether the mobile platform has entered the area to be explored. If yes, it can be further determined whether the mobile platform can obtain the map information of the area to be explored. If not, the above step is performed, in which the number of available parking spaces or other types of environmental functional areas around each passable passage is determined based on environmental information acquired by the sensors mounted on the mobile platform, that is, executing the step of exploring within the area to be explored to search for available parking spaces or other types of environmental functional areas. The inability to obtain the map information of the area to be explored includes any of the following situations: being unable to obtain the map of the area to be explored, obtaining an incomplete map of the area to be explored, or the mobile platform moving along the obtained map for a certain distance and then finding that no map exists ahead, etc.

Of course, in some embodiments, before executing the step of exploring within the area to be explored to search for available parking spaces or other types of environmental functional areas, prompt information can be sent to the user so that the user can decide whether to enter the above exploration mode. If a confirmation operation from the user is detected, the exploration mode is entered. That is, the steps are performed, in which the number of available parking spaces or other types of environmental functional areas in multiple passable passages around the mobile platform is determined based on environmental information acquired by the sensors mounted on the mobile platform, and the target passable passage is selected.

In some embodiments, if it is determined that the mobile platform can obtain the map information of the area to be explored, the movement of the mobile platform and the search for available parking spaces can be directly assisted based on the map information.

In one embodiment, if it is detected that a pre-planned movement route recorded by the mobile platform can be obtained after the mobile platform enters the area to be explored, the mobile platform can first be controlled to move along the movement route to search for environmental functional areas around the movement route. If the mobile platform does not find any environmental functional areas while moving along the pre-planned movement route, the mobile platform is controlled to enter the exploration mode to autonomously search for environmental functional areas. The pre-planned movement route can be determined based on the historical movement trajectory of the mobile platform.

For example, in an automatic parking scenario, currently there is a memory parking scheme, in which after the vehicle travels once in the parking lot, it can automatically record the driving route, that is, memorizing the route. Next time, the vehicle can travel along the memorized route and search for available parking spaces. If the vehicle fails to find an available parking space while driving along the memorized route, the vehicle can be controlled to enter the exploration mode, using the method described above to explore within the area to be explored and search for available parking spaces. Optionally, the vehicle can be controlled to enter the exploration mode and supplement the map information of the memory parking.

Of course, in some scenarios, if the mobile platform moving in the area to be explored based on a pre-obtained map finds that the map is incomplete and cannot obtain the map of certain sub-area, the mobile platform can also be automatically controlled to enter the above exploration mode, using the method described above to explore within the area to be explored and search for available parking spaces.

In some scenarios, after the mobile platform enters the above exploration mode, if during movement it is found that the mobile platform has reached an area for which a map can be obtained, the mobile platform can exit the above exploration mode and then directly search for available parking spaces in the area based on the map.

In some embodiments, when it is detected that the mobile platform moves to a boundary of the area to be explored, another area to be explored can be determined, and the mobile platform can be controlled to move to the other area to be explored to search for available parking spaces. The other area to be explored may be another area with a larger range that includes the original area to be explored, or may be another area that does not coincide with the original area to be explored.

In some embodiments, when it is detected that the mobile platform has moved to the boundary of the area to be explored, the mobile platform may be controlled to move backward based on the historical movement path and/or road structure information, or the mobile platform may be controlled to move backward along the historical movement path. That is, the mobile platform may continue to move within the original area to be explored to search for available parking spaces. Optionally, the backward movement includes turning around or moving backward. The historical movement path represents the path that the mobile platform has already traveled, which can, to a certain extent, ensure the safety of the movement of the mobile platform. The mobile platform may move along the historical movement path, or move along a newly planned path until an available parking space is found, wherein the newly planned path is replanned based on the road structure information perceived by the mobile platform. Considering that during the movement of the mobile platform, other mobile platforms may leave parking spaces and thus free up parking spaces, the mobile platform may be controlled to move repeatedly within the area to be explored until a parking space is found. Alternatively, when no available parking space can be found in the area to be explored, the mobile platform may continue to move repeatedly within the area to be explored, until the user re-takes control of the mobile platform, namely the user begins to manually control the mobile platform after a specified period. This approach may also serve as an optional method for the mobile platform to remain in the area to be explored for a specific duration even when parking is not possible.

In some embodiments, when it is detected that the mobile platform has moved to the boundary of the area to be explored, the mobile platform may also be controlled to stop moving. For example, the mobile platform may exit the exploration mode, and the user may take over control of the mobile platform.

In some embodiments, when it is detected that the mobile platform has moved to the boundary of the target area, a prompt information may also be issued to display to the user the above-mentioned several modes (re-exploration in another area to be explored, continued exploration in the original area to be explored, or exiting the exploration mode for the user to take over). After obtaining the user's selection operation, the mobile platform may be controlled to move according to the mode selected by the user.

In some embodiments, during the movement of the mobile platform in the area to be explored, marked positions may be determined from the surrounding environment of the mobile platform. After detecting a control instruction generated based on a user's control operation, the mobile platform may be controlled based on the control instruction so that the mobile platform moves from a stop position to the target marked position. The marked position may be a certain type of specific position, such as an elevator entrance, an entrance or exit, or other positions that the user may subsequently need to use. During movement in the area to be explored, the mobile platform may record these marked positions. When the user wants the mobile platform to move to a certain marked position (i.e., the target marked position), the user may input a control instruction to the mobile platform so that it can move from the stop position to the target marked position.

In some embodiments, preset positions detected based on environmental information may be determined as marked positions. For example, the user may predefine the types of marked positions, such as elevator entrances or exits. During movement, if the mobile platform identifies such marked positions based on the acquired environmental information, it may record information about these marked positions. The information of the marked position may include the position information of the marked position, and may also include the path information leading to the marked position.

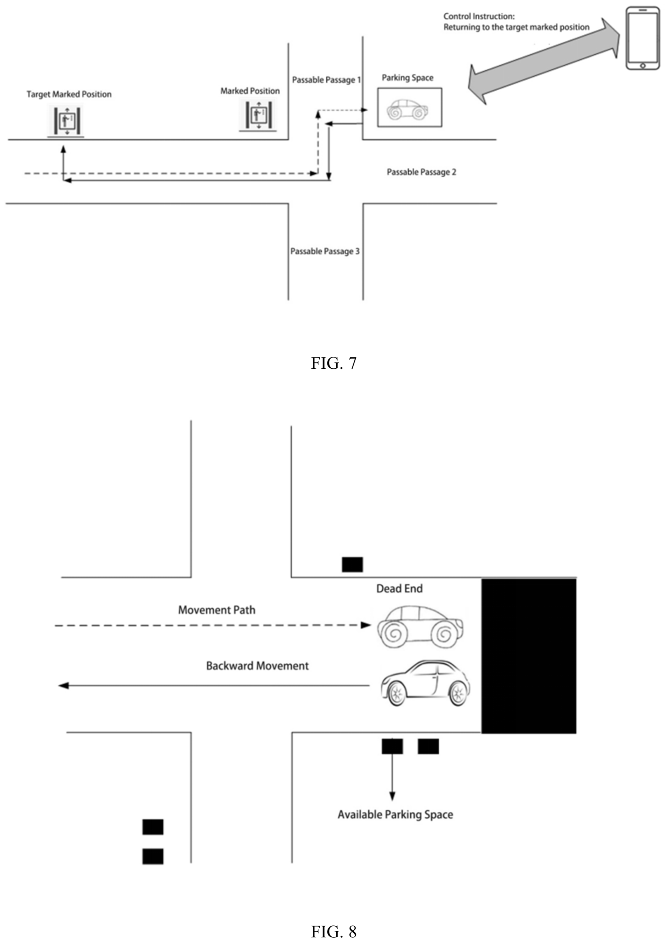

In some embodiments, positions indicated by the user through operation components (such as an interaction interface, button, or joystick on the mobile platform or control device thereof) may also be determined as marked positions. For example, during movement, the mobile platform may construct a map of the area it has traveled based on acquired environmental information and display the map to the user. The user may operate on the map displayed on the screen of the control device (for example, by selecting or clicking) to indicate a marked position, and then the information of the marked position indicated by the user may be recorded. In some embodiments, as shown in FIG. 7, when an instruction to control the mobile platform to move to a target marked position is detected from user input, the mobile platform may be controlled to move from the stop position to the target marked position based on environmental information and the historical movement trajectory of the mobile platform. During the movement of the mobile platform, the historical movement trajectory of the mobile platform and road structure information may be recorded, and the mobile platform may be controlled to return to the target marked position based on the historical movement trajectory and road structure information, thereby improving the efficiency of the mobile platform returning to the target marked position. The road structure information includes road boundaries, intersection information, and other road topology information.

For example, in an automatic parking scenario, when a vehicle travels to the entrance of a parking lot, the user may get out of the vehicle, switch the vehicle mode to the above-mentioned exploration mode, and instruct the vehicle to search for available parking spaces within 300 meters of the elevator entrance. The vehicle may autonomously explore the parking lot to find the elevator entrance, determine the area within 300 meters from the found elevator entrance as the area to be explored, and then search for available parking spaces in that area. During exploration, the vehicle may record the elevator entrances encountered along the way. At the same time, the vehicle may automatically construct a map of the explored area based on the acquired environmental information and display the map to the user through the control device of the vehicle (for example, the user's mobile phone). When the user needs to use the vehicle again, the user may select an elevator entrance on the map through the control device and remotely control the vehicle to move to the selected elevator entrance so that the user can go to that elevator entrance and get in the vehicle. Since the vehicle may pre-record historical driving routes, it can travel to the elevator entrance efficiently and quickly by combining the historical driving route. Through the above reverse-calling function, the vehicle can be conveniently and accurately recalled to a specific position.

In some embodiments, during the movement of the mobile platform, the passability of the passage in the current velocity direction of the mobile platform may be determined based on the environmental information acquired by the sensors and the state information of the mobile platform. If the passability is lower than a preset condition, the mobile platform may be controlled to move backward to the nearest intersection. For example, if a dead end, a narrow passage, or an obstacle that blocks passage exist in the velocity direction of the mobile platform, rendering the mobile platform unable to proceed, the mobile platform may be controlled to move backward to the nearest intersection to avoid being trapped in the current passage.

In some embodiments, as shown in FIG. 8, situations such as moving into a dead end may occur during the movement of the mobile platform. To enable the mobile platform to quickly escape, the movement path of the mobile platform may be recorded during movement. When it is detected that there are no passable passages in the area to be explored around the mobile platform, that is, when the mobile platform has entered a dead end, the mobile platform may be controlled to move backward along the recorded movement path to escape from the dead end.

In some embodiments, a map of the area to be explored may be generated based on environmental information acquired by the sensors during the movement of the mobile platform in the area to be explored. By generating the map based on acquired environmental information during exploration, it is convenient for subsequent guidance of the movement of the mobile platform within the area to be explored based on the constructed map, thereby improving traffic efficiency. Alternatively, the constructed map information may be shared, for example, by uploading it to the cloud for storage and updating, so that other mobile platforms may access this information via the cloud.

In some embodiments, after constructing a map of the area to be explored based on the acquired environmental information, the constructed map and other maps may be fused to generate a fusion map, which is used for the mobile platform to autonomously navigate again when returning to the area to be explored. For example, in a scenario where a map originally exists for the area to be explored but is incomplete, the newly constructed map may be used to supplement the original map to make it more complete. Alternatively, the newly constructed map may be used to update the original map, so that the map can be updated in a timely manner to reflect the latest road conditions.

In some scenarios, during the movement of the mobile platform along the target passable passage in the area to be explored, when it is detected that the environment around the mobile platform satisfies a preset environment and/or that the movement state of the mobile platform satisfies a preset movement state, prompt information may be generated to alert the user. The preset environment may include at least one of the following: narrow space, intersection, dead end, environment entrance, environment exit, turn, uphill, downhill, pit, bump, or toll booth. The preset movement state may include at least one of the following: backward driving, yielding, etc.

For example, taking the mobile platform as a vehicle, in some scenarios, the vehicle may be in a mode where the user onboard manually controls the vehicle, or in a mode where the user remotely controls the vehicle. In such cases, the user may be prompted based on the acquired environmental information and the detected movement state of the vehicle to assist in safe driving. For example, when the vehicle is detected entering a dead end or narrow space, the user may be prompted, or when the user performs illegal driving behavior, a prompt may be issued to ensure compliance and safe driving.

In some embodiments, the mobile platform may establish a communication with a mobile terminal, and the user may control the mobile platform through the mobile terminal. For example, when it is detected that the user performs an information acquisition operation on the mobile terminal, the state information of the mobile platform may be sent to the mobile terminal. In some embodiments, when a movement control operation from the user is detected on the mobile terminal, the mobile platform may be controlled to move.

Furthermore, the present application also provides a control method for a mobile platform, the method comprising:

detecting whether there are multiple passable passages within an area to be explored around the mobile platform; determining a description information of a surrounding environment of each passable passage based on environmental information acquired by sensors mounted on the mobile platform; determining at least one target passable passage from the multiple passable passages based on the description information, and generating a movement control instruction which is used to instruct the mobile platform to move along the target passable passage within the area to be explored.

Furthermore, the present application also provides a control method for a mobile platform, the method including:
obtaining environmental information acquired by sensors mounted on the mobile platform during movement of the mobile platform; detecting whether there are multiple passable passages in a movement direction of the mobile platform based on the environmental information; determining whether a user operation instruction is received if the multiple passable passages are detected; determining a description information of a surrounding environment of each passable passage based on the environmental information, if the user operation instruction is not received; determining at least one target passable passage from the multiple passable passages based on the description information, and generating a movement control instruction being used to instruct the mobile platform to move along the target passable passage within the area to be explored.

Furthermore, the present application further provides a control method for a mobile platform, the method including:
determining a description information of a surrounding environment of each passable passage based on environmental information acquired by sensors mounted on the mobile platform, in response to identifying that there are multiple passable passages within an area to be explored around the mobile platform; wherein the description information includes at least one of the following: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

In some embodiments, before determining at least one target passable passage from the multiple passable passages based on the description information, the method further includes:
determining whether a user operation instruction is received, the operation instruction being used to instruct the mobile platform to move within the area to be explored; performing the operation of determining at least one target passable passage from the multiple passable passages based on the description information, if the user operation instruction is not received.

In some embodiments, the target passable passage satisfies one or more of the following conditions:
there are multiple target passable passages, and the number of available parking spaces around the multiple target passable passages is greater than that around other passable passages;
the number of available parking spaces around the target passable passage is greater than that around other passable passages among the multiple passable passages;
the target passable passage does not point to an area that the mobile platform has already explored;
a passable length of the target passable passage is greater than that of other passable passages among the multiple passable passages.

In some embodiments, the description information further includes a distribution of environmental functional areas around the passable passages, wherein the environmental functional areas include one or more of the following: charging positions, passenger drop-off positions, exits, and entrances.

In some embodiments, the method further includes:
issuing prompt information to the user when it is detected that the mobile platform moves near an available parking space;
controlling the mobile platform to leave from the vicinity of the available parking space in response to a cancellation operation from the user.

In some embodiments, the method further includes:
if no available parking space is found within the area to be explored, performing any of the following operations:
identifying a specific area within the area to be explored based on the environmental information, and controlling the mobile platform to move to the specific area and remain there; or
determining information of an environmental functional area outside the area to be explored, and controlling the mobile platform to move to the environmental functional area.

In some embodiments, the number of movable objects around the specific area is less than a preset number; and/or, the information of the environmental functional area outside the area to be explored is determined based on a remote control operation from the user.

In some embodiments, the method further includes: when it is detected that the mobile platform moves to a boundary of the area to be explored, performing any of the following operations:
determining another area to be explored, and controlling the mobile platform to move to the other area to be explored to search for an available parking space; or
controlling the mobile platform to move backward along a historical movement path; or
controlling the mobile platform to stop moving.

The specific details of the above-mentioned mobile platform control method refer to the description of the above embodiments and will not be repeated here.

It can be readily understood that the solutions described in the above embodiments can be combined as long as there is no conflict among them, and such combinations are not exhaustively listed in the embodiments of the present application.

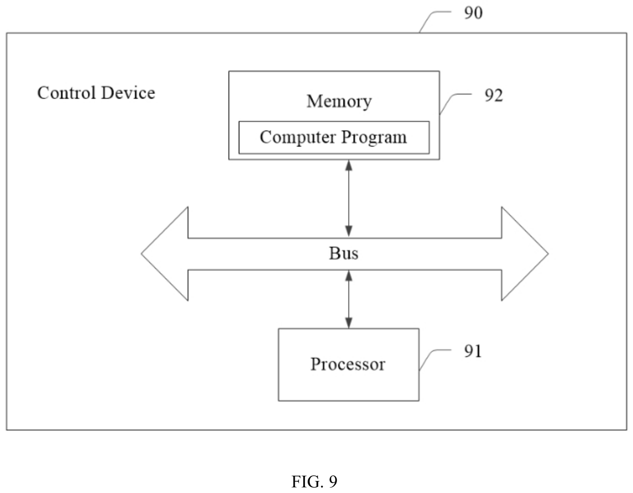

Furthermore, the embodiments of the present application also provide a control device for a mobile platform. As shown in FIG. 9, the device includes a processor 91, a memory 92, and a computer program stored in the memory 92 that can be executed by the processor 91. When the processor 91 executes the computer program, the following steps can be implemented:
determining the number of available parking spaces around each passable passage based on environmental information acquired by sensors mounted on the mobile platform, in response to identifying that there are multiple passable passages within an area to be explored around the mobile platform;
determining at least one target passable passage from the multiple passable passages based on the number of available parking spaces around each passable passage; and controlling the mobile platform to move along the target passable passage within the area to be explored to search for an available parking space along the target passable passage.

In some embodiments, there are multiple target passable passages, and the number of available parking spaces around the multiple target passable passages is greater than that around other passable passages.

In some embodiments, the number of available parking spaces around the target passable passage is greater than that around other passable passages among the multiple passable passages.

In some embodiments, before determining at least one target passable passage from the multiple passable passages, the processor is further configured to:
determining whether a user operation instruction is received, the operation instruction being used to instruct the mobile platform to move within the area to be explored;
performing the operation of determining at least one target passable passage from the multiple passable passages, if the user operation instruction is not received.

In some embodiments, the step of determining at least one target passable passage from the multiple passable passages by the processor comprises:
determining at least one target passable passage from the multiple passable passages based on one or more of the following information:
a distribution of environmental functional areas around each passable passage, a coincidence rate between each passable passage and a historical movement trajectory of the mobile platform, and a passable length of each passable passage.

In some embodiments, the environmental functional areas include one or more of the following: charging positions, passenger drop-off positions, exits, and entrances.

In some embodiments, the target passable passage does not point to an area already explored by the mobile platform, and/or the passable length of the target passable passage is greater than that of other passable passages among the multiple passable passages.

In some embodiments, the processor is further configured to:
send prompt information to the user when it is detected that the mobile platform moves to the vicinity of an available parking space; and
control the mobile platform to leave from the vicinity of the available parking space in response to a cancel operation from the user.

In some embodiments, the processor is further configured to:
perform any of the following operations if no available parking space is found within the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

In some embodiments, the number of movable objects around the specific area is less than a preset number; and/or
the information of the environmental functional area outside the area to be explored is determined based on a remote control operation of the user.

In some embodiments, the number of available parking spaces around each passable passage is determined based on the description of identifiers recognized from the environmental information.

In some embodiments, the processor is further configured to:
determine an area within a preset distance range from a target position as the area to be explored, wherein the target position is determined based on one or more of the following information:
position information obtained based on a user operation instruction, and preset position information detected based on the environmental information.

In some embodiments, the processor is further configured to:
determine whether the mobile platform can obtain map information of the area to be explored, if it is detected that the mobile platform enters the area to be explored;
perform the step of determining the number of available parking spaces around each passable passage based on the environmental information acquired by the sensors mounted on the mobile platform, if the map information cannot be obtained.

In some embodiments, the processor is further configured to:
perform any of the following operations when it is detected that the mobile platform moves to the boundary of the area to be explored:
determining another area to be explored, and controlling the mobile platform to move to the other area to be explored to search for an available parking space; or
controlling the mobile platform to move backward along a historical movement path; or
controlling the mobile platform to stop moving.

In some embodiments, the processor is further configured to:
determine a marked position from the surrounding environment of the mobile platform during the movement of the mobile platform within the area to be explored;
generate a control instruction in response to a control operation of the user, the control instruction being used to instruct the mobile platform to move from a stop position to a target marked position.

In some embodiments, the marked position is determined in the following manner:
determining a preset position detected based on the environmental information as the marked position, and/or determining a position indicated by the user through an operation component as the marked position.

In some embodiments, the processor is further configured to:
record the movement path of the mobile platform; and
control the mobile platform to move backward along the recorded movement path, if it is detected that there is no passable passage in the area to be explored around the mobile platform.

In some embodiments, the processor is further configured to:
generate a map of the area to be explored based on the environmental information acquired by the sensors during the movement of the mobile platform within the area to be explored.

In some embodiments, the processor is further configured to:
generate prompt information, if it is detected that a surrounding environment of the mobile platform satisfies a preset environment and/or a movement state of the mobile platform satisfies a preset movement state, when the mobile platform moves along the target passable passage within the area to be explored.

The specific details of the above-mentioned mobile platform control device for controlling the movement of the mobile platform refer to the description of the above method embodiments and will not be repeated here.

The embodiment of the present application further provides a mobile platform control device. As shown in FIG. 9, the device includes a processor 91, a memory 92, and a computer program stored in the memory 92 and executable by the processor 91. When the processor 91 executes the computer program, the following steps can be implemented:
determining description information of a surrounding environment of each passable passage based on environmental information acquired by sensors mounted on the mobile platform, in response to identifying that there are multiple passable passages in an area to be explored around the mobile platform;
wherein the description information includes at least one of the following information: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

In some embodiments, before determining at least one target passable passage from the multiple passable passages based on the description information, the processor is further configured to:
determine whether a user operation instruction is received, the operation instruction being used to instruct the mobile platform to move within the area to be explored;
perform the operation of determining at least one target passable passage from the multiple passable passages based on the description information, if the user operation instruction is not received.

In some embodiments, the target passable passage satisfies one or more of the following conditions:
there are multiple target passable passages, and the number of available parking spaces around the multiple target passable passages is greater than that around other passable passages;
the number of available parking spaces around the target passable passage is greater than that around other passable passages among the multiple passable passages;
the target passable passage does not point to an area already explored by the mobile platform; and
the passable length of the target passable passage is greater than that of other passable passages among the multiple passable passages.

In some embodiments, the description information further includes the distribution of environmental functional areas around the passable passages, and the environmental functional areas include one or more of the following: charging positions, passenger drop-off positions, exits, and entrances.

In some embodiments, the processor is further configured to:
send prompt information to the user when it is detected that the mobile platform moves to the vicinity of an available parking space; and
control the mobile platform to leave from the vicinity of the available parking space in response to a cancel operation from the user.

In some embodiments, the processor is further configured to:
perform any of the following operations if no available parking space is found in the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

In some embodiments, the number of movable objects around the specific area is less than a preset number; and/or
the information of the environmental functional area outside the area to be explored is determined based on a remote control operation of the user.

In some embodiments, the processor is further configured to:
perform any of the following operations when it is detected that the mobile platform moves to the boundary of the area to be explored:
determining another area to be explored, and controlling the mobile platform to move to the other area to be explored to search for an available parking space; or
controlling the mobile platform to move backward along a historical movement path; or
controlling the mobile platform to stop moving.

The specific details of the above-mentioned mobile platform control device for controlling the movement of the mobile platform refer to the description of the above method embodiments and will not be repeated here.

Accordingly, the embodiment of the present application further provides a mobile platform, the mobile platform including the mobile platform control device mentioned in any of the above embodiments. The mobile platform may be a vehicle, aircraft, vessel, intelligent robot, or other movable device. The mobile platform may be a manned mobile platform or an unmanned mobile platform.

Accordingly, the embodiment of the present application further provides a computer storage medium, in which a program is stored, and when executed by a processor, the program implements the method in any of the above embodiments.

The embodiment of the present application may be implemented in the form of a computer program product implemented on one or more storage media containing program code (including but not limited to disk storage, CD-ROM, optical memory, etc.). The computer-readable storage medium includes permanent and non-permanent, movable and non-movable media, and can store information by any method or technology. The information may include computer-readable instructions, data structures, program modules, or other data. Examples of computer storage media include but are not limited to: phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, digital versatile disc (DVD) or other optical storage, magnetic cassettes, magnetic tape, magnetic disk storage or other magnetic storage devices, or any other non-transmission medium that can store information accessible by computing devices.

For the device embodiments, since they basically correspond to the method embodiments, relevant parts can be referred to in the descriptions of the method embodiments. The above-described device embodiments are merely exemplary. The units described as separate components may or may not be physically separated; the components displayed as units may or may not be physical units, i.e., they can be located in one place or distributed across multiple network units. Parts or all of the modules may be selected according to actual needs to achieve the purposes of the embodiments of this application. A person of ordinary skill in the art can understand and implement the embodiments without creative work.

It should be noted that, in this document, relational terms such as "first" and "second" are merely used to distinguish one entity or operation from another entity or operation, and do not necessarily require or imply any actual relationship or order between these entities or operations. The terms "include", "comprise", or any other variants thereof are intended to cover non-exclusive inclusion, such that a process, method, article, or apparatus including a series of elements not only includes those elements but also includes other elements not explicitly listed or elements inherent to such process, method, article, or apparatus. Without further limitations, an element defined by the phrase "comprising a..." does not exclude the existence of other identical elements in a process, method, article, or apparatus including the described element.

The methods and devices provided in the embodiments of the present invention have been described in detail above. Specific examples have been used to illustrate the principles and implementations of the present invention. The description of the above embodiments is only to help understand the method and core ideas of the present invention. At the same time, for a person of ordinary skill in the art, according to the ideas of the present invention, there may be changes in specific implementations and application scopes. In summary, the content of this specification should not be construed as limiting the present invention.

## Claims

1. A control method for a mobile platform, comprising:
determining the number of available parking spaces around each passable passage based on environmental information acquired by sensors mounted on the mobile platform, in response to identifying that there are multiple passable passages within an area to be explored around the mobile platform;
determining at least one target passable passage from the multiple passable passages based on the number of available parking spaces around each passable passage; and
controlling the mobile platform to move along the at least one target passable passage within the area to be explored to search for an available parking space along the target passable passage.

2. The method according to claim 1, wherein there are multiple target passable passages, and the number of available parking spaces around the multiple target passable passages is greater than that around other passable passages.

3. The method according to claim 1, wherein the number of available parking spaces around the target passable passage is greater than that around other passable passages among the multiple passable passages.

4. The method according to claim 1, wherein before determining at least one target passable passage from the multiple passable passages, the method further comprises:
determining whether a user operation instruction is received, the operation instruction being used to instruct the mobile platform to move within the area to be explored; and
performing the operation of determining at least one target passable passage from the multiple passable passages, if the user operation instruction is not received.

5. The method according to claim 1, wherein determining at least one target passable passage from the multiple passable passages comprises:
determining at least one target passable passage from the multiple passable passages based on one or more of the following information:
a distribution of environmental functional areas around each passable passage, a coincidence rate between each passable passage and a historical movement trajectory of the mobile platform, and a passable length of each passable passage.

6. The method according to claim 5, wherein the environmental functional areas comprise one or more of the following: charging positions, passenger drop-off positions, exits, and entrances.

7. The method according to claim 1, wherein the target passable passage does not point to an area that the mobile platform has already explored, and/or the passable length of the target passable passage is greater than that of other passable passages among the multiple passable passages.

8. The method according to claim 1, further comprising:
sending prompt information to a user when it is detected that the mobile platform moves near an available parking space; and
controlling the mobile platform to leave from the vicinity of the available parking space in response to a cancel operation from the user.

9. The method according to claim 1, further comprising:
performing any of the following operations if no available parking space is found within the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

10. The method according to claim 9, wherein:
the number of movable objects around the specific area is smaller than a preset number; and/or
the information of the environmental functional area outside the area to be explored is determined based on a remote control operation of a user.

11. The method according to claim 1, wherein the number of available parking spaces around each passable passage is determined based on a description of an identifier recognized from the environmental information.

12. The method according to claim 1, further comprising:
determining an area within a preset distance range from a target position as the area to be explored, wherein the target position is determined based on one or more of the following information:
position information obtained based on a user operation instruction, and
preset position information detected based on the environmental information.

13. The method according to claim 1, further comprising:
determining whether the mobile platform is able to obtain map information of the area to be explored when it is detected that the mobile platform enters the area to be explored; and
performing the step of determining the number of available parking spaces around each passable passage based on environmental information acquired by sensors mounted on the mobile platform, if the map information is not able to be obtained.

14. The method according to claim 1, further comprising:
performing any of the following operations when it is detected that the mobile platform moves to a boundary of the area to be explored:
determining other area to be explored, and controlling the mobile platform to move to the other area to be explored to search for an available parking space; or
controlling the mobile platform to move backward along a historical movement path; or
controlling the mobile platform to stop moving.

15. The method according to claim 1, further comprising:
determining a marked position from a surrounding environment of the mobile platform during movement of the mobile platform within the area to be explored; and
generating a control instruction in response to a control operation of a user, the control instruction being used to instruct the mobile platform to move from a stop position to a target marked position.

16. The method according to claim 15, wherein the marked position is determined in the following ways:
determining a preset position detected based on the environmental information as the marked position, and/or determining a position indicated by the user through an operation component as the marked position.

17. The method according to claim 1, further comprising:
recording a movement path of the mobile platform; and
controlling the mobile platform to travel backward along the recorded movement path when it is detected that there is no passable passage within the area to be explored around the mobile platform.

18. The method according to claim 1, further comprising:
generating a map of the area to be explored based on the environmental information acquired by the sensors during movement of the mobile platform within the area to be explored.

19. The method according to claim 1, further comprising:
generating prompt information during movement of the mobile platform along the target passable passage within the area to be explored when it is detected that a surrounding environment of the mobile platform meets a preset environment and/or that a movement state of the mobile platform meets a preset movement state.

20. A control method for a mobile platform, comprising:
determining description information of a surrounding environment of each passable passage based on environmental information acquired by sensors mounted on the mobile platform, in response to identifying that there are multiple passable passages within an area to be explored around the mobile platform;
wherein the description information comprises at least one of the following information: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

21. The method according to claim 20, wherein before determining at least one target passable passage from the multiple passable passages based on the description information, the method further comprises:
determining whether a user operation instruction is received, the operation instruction being used to instruct the mobile platform to move within the area to be explored; and
performing the operation of determining at least one target passable passage from the multiple passable passages based on the description information, if the user operation instruction is not received.

22. The method according to claim 20, wherein the target passable passage satisfies one or more of the following conditions:
there are multiple target passable passages, and the number of available parking spaces around the multiple target passable passages is greater than that around other passable passages;
the number of available parking spaces around the target passable passage is greater than that around other passable passages among the multiple passable passages;
the target passable passage does not point to an area already explored by the mobile platform; and
a passable length of the target passable passage is greater than that of other passable passages among the multiple passable passages.

23. The method according to claim 20, wherein the description information further comprises a distribution of environmental functional areas around the passable passage, wherein the environmental functional areas comprise one or more of the following: charging positions, passenger drop-off positions, exits, and entrances.

24. The method according to claim 20, further comprising:
sending prompt information to a user when it is detected that the mobile platform moves near an available parking space; and
controlling the mobile platform to leave from the vicinity of the available parking space in response to a cancel operation of the user.

25. The method according to claim 20, further comprising:
performing any of the following operations if no available parking space is found within the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

26. The method according to claim 25, wherein:
the number of movable objects around the specific area is smaller than a preset number; and/or
the information of the environmental functional area outside the area to be explored is determined based on a remote control operation of a user.

27. The method according to claim 20, further comprising:
performing any of the following operations when it is detected that the mobile platform moves to a boundary of the area to be explored:
determining another area to be explored, and controlling the mobile platform to move to the other area to be explored to search for an available parking space; or
controlling the mobile platform to move backward along a historical movement path; or
controlling the mobile platform to stop moving.

28. A control device for a mobile platform, wherein the device comprises a processor, a memory, and a computer program stored in the memory and executable by the processor, wherein when the processor executes the computer program, following steps are implemented:
determining the number of available parking spaces around each passable passage based on environmental information acquired by sensors mounted on the mobile platform, in response to identifying that there are multiple passable passages within an area to be explored around the mobile platform;
determining at least one target passable passage from the multiple passable passages based on the number of available parking spaces around each passable passage; and
controlling the mobile platform to move along the target passable passage within the area to be explored to search for an available parking space along the target passable passage.

29. The device according to claim 28, wherein there are multiple target passable passages, and the number of available parking spaces around the multiple target passable passages is greater than that around other passable passages.

30. The device according to claim 28, wherein the number of available parking spaces around the target passable passage is greater than that around other passable passages among the multiple passable passages.

31. The device according to claim 28, wherein before determining at least one target passable passage from the multiple passable passages, the processor is further configured for:
determining whether a user operation instruction is received, the operation instruction being used to instruct the mobile platform to move within the area to be explored; and
performing the operation of determining at least one target passable passage from the multiple passable passages, if the user operation instruction is not received.

32. The device according to claim 28, wherein the step of determining at least one target passable passage from the multiple passable passages by the processor comprises:
determining at least one target passable passage from the multiple passable passages based on one or more of the following information:
a distribution of environmental functional areas around each passable passage, a coincidence rate between each passable passage and a historical movement trajectory of the mobile platform, and a passable length of each passable passage.

33. The device according to claim 28, wherein the environmental functional areas comprise one or more of the following: charging positions, passenger drop-off positions, exits, and entrances.

34. The device according to claim 28, wherein the target passable passage does not point to an area that the mobile platform has already explored, and/or the passable length of the target passable passage is greater than that of other passable passages among the multiple passable passages.

35. The device according to claim 28, wherein the processor is further configured for:
sending prompt information to a user when it is detected that the mobile platform moves near an available parking space; and
controlling the mobile platform to leave from the vicinity of the available parking space in response to a cancel operation from the user.

36. The device according to claim 28, wherein the processor is further configured for:
performing any of the following operations if no available parking space is found within the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

37. The device according to claim 36, wherein:
the number of movable objects around the specific area is smaller than a preset number; and/or the information of the environmental functional area outside the area to be explored is determined based on a remote control operation of a user.

38. The device according to claim 28, wherein the number of available parking spaces around each passable passage is determined based on a description of an identifier recognized from the environmental information.

39. The device according to claim 28, wherein the processor is further configured for:
determining an area within a preset distance range from a target position as the area to be explored, wherein the target position is determined based on one or more of the following information:
position information obtained based on a user operation instruction, and
preset position information detected based on the environmental information.

40. The device according to claim 28, wherein the processor is further configured for:
determining whether the mobile platform is able to obtain map information of the area to be explored when it is detected that the mobile platform enters the area to be explored; and
performing the step of determining the number of available parking spaces around each passable passage based on environmental information acquired by sensors mounted on the mobile platform, if the map information is not able to be obtained.

41. The device according to claim 28, wherein the processor is further configured for:
performing any of the following operations when it is detected that the mobile platform moves to a boundary of the area to be explored:
determining another area to be explored, and controlling the mobile platform to move to the other area to be explored to search for an available parking space; or
controlling the mobile platform to move backward along a historical movement path; or
controlling the mobile platform to stop moving.

42. The device according to claim 28, wherein the processor is further configured for:
determining a marked position from a surrounding environment of the mobile platform during movement of the mobile platform within the area to be explored; and
generating a control instruction in response to a control operation of a user, the control instruction being used to instruct the mobile platform to move from a stop position to a target marked position.

43. The device according to claim 42, wherein the marked position is determined based on:
determining a preset position detected based on the environmental information as the marked position, and/or determining a position indicated by the user through an operation component as the marked position.

44. The device according to claim 28, wherein the processor is further configured for:
recording a movement path of the mobile platform; and
controlling the mobile platform to travel backward along the recorded movement path when it is detected that there is no passable passage within the area to be explored around the mobile platform.

45. The device according to claim 28, wherein the processor is further configured for:
generating a map of the area to be explored based on the environmental information acquired by the sensors during movement of the mobile platform within the area to be explored.

46. The device according to claim 28, wherein the processor is further configured for:
generating prompt information during movement of the mobile platform along the target passable passage within the area to be explored when it is detected that a surrounding environment of the mobile platform meets a preset environment and/or that a movement state of the mobile platform meets a preset movement state.

47. A control device for a mobile platform, wherein the device comprises a processor, a memory, and a computer program stored in the memory and executable by the processor, wherein when the processor executes the computer program, following steps are implemented:
determining description information of a surrounding environment of each passable passage based on environmental information acquired by sensors mounted on the mobile platform, in response to identifying that there are multiple passable passages within an area to be explored around the mobile platform;
wherein the description information comprises at least one of the following information: a distribution of available parking spaces around the passable passage, a coincidence rate between the passable passage and a historical movement trajectory of the mobile platform, and a passable length of the passable passage;
determining at least one target passable passage from the multiple passable passages based on the description information; and
controlling the mobile platform to move along the target passable passage within the area to be explored to search for an available parking space along the target passable passage.

48. The device according to claim 47, wherein before determining at least one target passable passage from the multiple passable passages based on the description information, the processor is further configured for:
determining whether a user operation instruction is received, the operation instruction being used to instruct the mobile platform to move within the area to be explored; and
performing the operation of determining at least one target passable passage from the multiple passable passages based on the description information, if the user operation instruction is not received.

49. The device according to claim 47, wherein the target passable passage satisfies one or more of the following conditions:
there are multiple target passable passages, and the number of available parking spaces around the multiple target passable passages is greater than that around other passable passages;
the number of available parking spaces around the target passable passage is greater than that around other passable passages among the multiple passable passages;
the target passable passage does not point to an area already explored by the mobile platform; and
a passable length of the target passable passage is greater than that of other passable passages among the multiple passable passages.

50. The device according to claim 47, wherein the description information further comprises a distribution of environmental functional areas around the passable passage, and wherein the environmental functional areas comprise one or more of the following: charging positions, passenger drop-off positions, exits, and entrances.

51. The device according to claim 47, wherein the processor is further configured for:
sending prompt information to a user when it is detected that the mobile platform moves near an available parking space; and
controlling the mobile platform to leave from the vicinity of the available parking space in response to a cancel operation of the user.

52. The device according to claim 47, wherein the processor is further configured for:
performing any of the following operations if no available parking space is found within the area to be explored:
identifying a specific area within the area to be explored based on the environmental information, and controlling the mobile platform to move to and stay in the specific area; or
determining information of an environmental functional area outside the area to be explored, and controlling the mobile platform to move to the environmental functional area.

53. The device according to claim 52, wherein:
the number of movable objects around the specific area is smaller than a preset number; and/or
the information of the environmental functional area outside the area to be explored is determined based on a remote control operation of a user.

54. The device according to claim 47, wherein the processor is further configured for:
performing any of the following operations when it is detected that the mobile platform moves to a boundary of the area to be explored:
determining another area to be explored, and controlling the mobile platform to move to the other area to be explored to search for an available parking space; or
controlling the mobile platform to move backward along a historical movement path; or
controlling the mobile platform to stop moving.

55. A mobile platform, wherein the mobile platform comprises the device according to any one of claims 28 to 54.

56. A computer-readable storage medium, wherein a computer program is stored on the computer-readable storage medium, and when the computer program is executed, the method according to any one of claims 1 to 27 is implemented.
